# EUROPEAN PATENT APPLICATION

(11) **EP 4 804 277 A1**
(43) Date of publication of application: **09.09.2026**
(21) Application number: 24885854.0
(22) Date of filing: 31.10.2024
(51) Int. Cl.: H01M 10/0568, H01M 4/131, H01M 4/505, H01M 4/525, H01M 10/052

(54) **NON-AQUEOUS ELECTROLYTE SOLUTION FOR SECONDARY BATTERY, AND SECONDARY BATTERY PROVIDED WITH SAID SOLUTION**

(30) Priority: 02.11.2023 JP 2023188908
(71) Applicant: Stella Chemifa Corporation, Osaka-shi, Osaka 541-0044 (JP)
(72) Inventor: MINE, Natsuki, Sakai-shi, Osaka 590-0982 (JP); EDA, Shohei, Sakai-shi, Osaka 590-0982 (JP); KOJIMA, Yutaka, Sakai-shi, Osaka 590-0982 (JP); KATSURA, Yoshifumi, Sakai-shi, Osaka 590-0982 (JP); SAKAGUCHI, Toshitaka, Sakai-shi, Osaka 590-0982 (JP); KON, Sojiro, Sakai-shi, Osaka 590-0982 (JP); TOMISAKI, Megumi, Sakai-shi, Osaka 590-0982 (JP); HASEBE, Rui, Sakai-shi, Osaka 590-0982 (JP); NISHIDA, Tetsuo, Sakai-shi, Osaka 590-0982 (JP)
(74) Representative: Parker, Andrew James
(86) International application number: PCT/JP2024/038985
(87) International publication number: WO 2025/095088

(57) **Abstract**

Provided is a nonaqueous electrolyte solution for a secondary battery which is excellent in electric capacity retention characteristics and favorably suppresses an increase in internal resistance when a secondary battery used at a high voltage is stored in a high-temperature environment, and exhibits favorable electric capacity retention characteristics even when such a secondary battery is repeatedly charged and discharged at a high charge voltage after storage in a high-temperature environment, and a secondary battery provided the same. The nonaqueous electrolyte solution for a secondary battery of the present invention contains an electrolyte and a nonaqueous solvent, and further contains at least one fluorophosphate represented by Chemical Formula (1) as an additive: 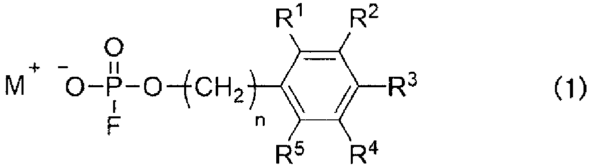 wherein M⁺ represents an alkali metal ion, R¹ to R⁵ each independently represent a hydrogen atom, a hydrocarbon group having 1 to 10 carbon atoms, and the like, or R¹ to R⁵ each independently represent any of a hydrocarbon group having 1 to 10 carbon atoms, an alkoxy group having 1 to 10 carbon atoms, and the like, and optionally selected combinations are bonded to each other to form a cyclic structure, and n represents an integer of 0 to 10.

## Description

### TECHNICAL FIELD

The present invention relates to a nonaqueous electrolyte solution for a secondary battery which is excellent in, for example, electric capacity retention characteristics and suppression of an increase in internal resistance when a secondary battery used at a high voltage is stored in a high-temperature environment, and also excellent in electric capacity retention characteristics when such a secondary battery is repeatedly charged and discharged, and a secondary battery provided the same.

### BACKGROUND ART

Lithium ion secondary batteries having a small size and a high battery capacity have been widely used as power supplies for personal digital assistants such as notebook computers, digital cameras, mobile phones, smartphones, and tablets. In recent years, lithium ion secondary batteries have been mounted on electric vehicles (xEVs) as key devices for realizing carbon neutral. In addition, since the application of the lithium ion secondary batteries is spreading to household power supplies and stationary storage batteries for power storage systems such as mega solar power generation, development of lithium ion secondary batteries with higher energy density is in progress.

In conventional general lithium ion secondary batteries, a material capable of reversibly inserting Li ions into a positive electrode active material and a negative electrode active material is used. For example, a compound such as LiNiO₂, LiCoO₂, LiMn₂O₄, or LiFePO₄ is used as the positive electrode active material. As the negative electrode active material, lithium metal, an alloy thereof, a carbon material, a graphite material, or the like is used. Further, as an electrolytic solution used in a lithium ion secondary battery, an electrolytic solution obtained by dissolving an electrolyte such as LiPF₆ or LiBF₄ in a mixed solvent such as ethylene carbonate, diethyl carbonate or propylene carbonate is used.

Here, it is generally interpreted that a stable film (SEI: Solid Electrolyte Interphase) having lithium ion conductivity but no electron conductivity is formed at the interface between the electrode active material layer and the electrolytic solution. The process of inserting and extracting lithium ions into and from the electrode active material is excellent in reversibility, but when the electrode active material is stored under a high-temperature environment for a long period of time or is repeatedly charged and discharged under a high-voltage condition, cracks, dissolution and decomposition occur in the SEI, and accumulation of gas and decomposition products generated due to this inhibits movement of lithium ions, causing an increase in internal resistance of the lithium ion secondary battery and deterioration of battery performance. Therefore, it is important how to form a stable SEI against a severe use environment and operation conditions of the lithium ion secondary battery. From such a viewpoint, efforts have been made to form a stable SEI by adding an additive to an electrolytic solution.

For example, Patent Document 1 discloses an electrolytic solution for a secondary battery, containing a nonaqueous solvent containing a monofluorophosphate ester salt, and a lithium salt as a solute. Further, according to Patent Document 1, a high-quality film can be formed at an electrode interface by using an electrolytic solution for a secondary battery having such a configuration, and decomposition of the electrolytic solution for a secondary battery can be suppressed by formation of this film, and as a result, a capacity residual ratio and a capacity recovery ratio can be improved.

In addition, in the lithium ion secondary battery, in order to improve the durability of the charge-discharge cycle, increase the energy density, and the like, the positive electrode active material has also been improved in response to severe use environment and operation conditions. For example, by using LiNiO₂ for the positive electrode active material, the charge voltage of the lithium ion secondary battery is increased to improve energy density. When LiNiO₂ is used for the positive electrode active material, the theoretical value of the battery capacity is high, but the thermal stability of the battery characteristics is low. As such, ternary transition metal oxides containing cobalt and manganese are also used for the positive electrode active material instead of LiNiO₂.

Further, due to concerns about the reserve of cobalt as a natural resource, a positive electrode active material in which the composition ratio of cobalt is reduced and the composition ratio of nickel is increased has also been developed. For example, in Patent Document 2, a transition metal oxide represented by Liₓ(Ni_{y}M_{1-y})O_{z} (wherein M is one or more selected from the group consisting of Mn, Co, Mg, Al, Ti, Cr, Fe, Cu, and Zr, x ranges from 0.9 to 1.2, y ranges from 0.3 to 0.95, and z ranges from 1.8 to 2.4) wherein the composition ratio of nickel is increased to 75%, is used as a positive electrode active material.

### PRIOR ART DOCUMENT

### PATENT DOCUMENT

Patent Document 1: WO 2016/024496
Patent Document 2: WO 2010/113583

### SUMMARY OF THE INVENTION

### PROBLEMS TO BE SOLVED BY THE INVENTION

However, in the lithium ion secondary battery using the electrolytic solution for a secondary battery of Patent Document 1, when an attempt is made to operate the lithium ion secondary battery at a high charge voltage, satisfactory battery characteristics are not obtained, and further improvement is required. In particular, in a lithium ion secondary battery for high-voltage specification, which includes, as a positive electrode active material, a ternary transition metal oxide having a high nickel composition ratio as disclosed in Patent Document 2, there are problems that electric capacity retention performance when the battery is stored in a high-temperature environment is not sufficient, and the internal resistance also increases.

The present invention has been made in view of the above problems, and an object of the present invention is to provide a nonaqueous electrolyte solution for a secondary battery which is excellent in electric capacity retention characteristics and favorably suppresses an increase in internal resistance when a secondary battery used at a high voltage is stored in a high-temperature environment, and exhibits favorable electric capacity retention characteristics even when such a secondary battery is repeatedly charged and discharged at a high charge voltage after storage in a high-temperature environment, and a secondary battery provided the same.

### SOLUTIONS TO THE PROBLEMS

In order to solve the above problems, a nonaqueous electrolyte solution for a secondary battery of the present invention is a nonaqueous electrolyte solution for a secondary battery, comprising: an electrolyte; and a nonaqueous solvent, wherein the nonaqueous electrolyte solution for a secondary battery further contains at least one fluorophosphate represented by Chemical Formula (1) as an additive: 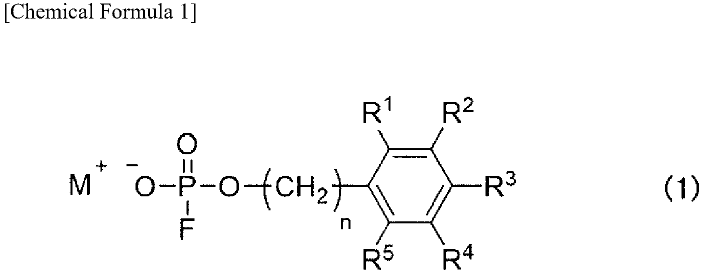 wherein M⁺ represents an alkali metal ion, R¹ to R⁵ each independently represent a hydrogen atom; a hydrocarbon group having 1 to 10 carbon atoms; an alkoxy group having 1 to 10 carbon atoms; a hydrocarbon group having 1 to 10 carbon atoms and a halogen atom and/or an unsaturated bond; or an alkoxy group having 1 to 10 carbon atoms and a halogen atom and/or an unsaturated bond, or R¹ to R⁵ each independently represent any of a hydrocarbon group having 1 to 10 carbon atoms; an alkoxy group having 1 to 10 carbon atoms; a hydrocarbon group having 1 to 20 carbon atoms and a halogen atom, a heteroatom, and/or an unsaturated bond; or an alkoxy group having 1 to 20 carbon atoms and a halogen atom, a heteroatom, and/or an unsaturated bond, and optionally selected combinations are bonded to each other to form a cyclic structure, and n represents an integer of 0 to 10.

In the above configuration, an addition amount of the fluorophosphate is preferably in a range of 0.01 mass% or more and 2 mass% or less with respect to a total mass of the nonaqueous electrolyte solution for a secondary battery.

In the above configuration, the fluorophosphate is preferably lithium phenyl fluorophosphate, sodium phenyl fluorophosphate, lithium benzyl fluorophosphate, sodium benzyl fluorophosphate, lithium 4-tert-amylphenyl fluorophosphate, or sodium 4-tert-amylphenyl fluorophosphate.

A secondary battery according to the present invention comprises at least: the nonaqueous electrolyte solution for a secondary battery; a positive electrode; and a negative electrode.

In the above configuration, a charge voltage is preferably 4.3 V or more.

In the above configuration, the secondary battery is preferably stored in an environment of 40 °C or higher after being charged at a charge voltage of 4.3 V or more.

In the above configuration, a positive electrode active material constituting a positive electrode active material layer in the positive electrode preferably contains a binary transition metal oxide or a ternary transition metal oxide.

### EFFECTS OF THE INVENTION

According to the present invention, by containing at least one fluorophosphate represented by Chemical Formula (1) as an additive in a nonaqueous electrolyte solution for a secondary battery, it is possible to favorably suppress an increase in internal resistance of a secondary battery even when a secondary battery used at a high voltage is stored in a high-temperature environment. In addition, the electrical capacity of the secondary battery can be favorably maintained, and thus the storage performance of the secondary battery can be improved. Further, even when the secondary battery after storage in a high-temperature environment is charged and discharged at a high charge voltage, a high discharge capacity can be maintained, and cycle characteristics can be improved.

### BRIEF DESCRIPTION OF THE DRAWINGS

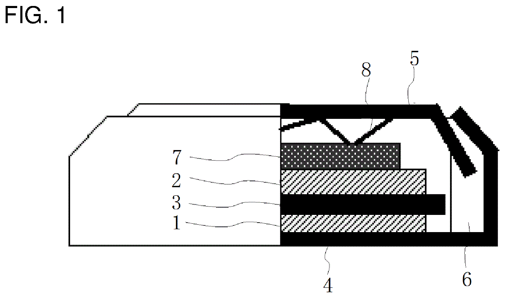

FIG.1 is a schematic cross-sectional view showing an outline of a lithium ion secondary battery including a nonaqueous electrolyte solution for a secondary battery according to an embodiment of the present invention.

### EMBODIMENTS OF THE INVENTION

### (Nonaqueous electrolytic solution for secondary battery)

The nonaqueous electrolyte solution for a secondary battery (hereinafter, referred to as a "nonaqueous electrolyte solution") according to the present embodiment contains at least an electrolyte, a nonaqueous solvent, and at least one fluorophosphate as an additive. The nonaqueous electrolyte solution of the present embodiment is suitably used for, for example, an electrolytic solution of a secondary battery such as a lithium ion secondary battery used at a high voltage.

In the lithium ion secondary battery, it is presumed that an irreversible decomposition reaction of the nonaqueous electrolyte solution occurs at the interface between the electrode and the nonaqueous electrolyte solution during initial charging, and a film is formed on the electrode surface. It is considered that the properties of the film to be formed, for example, properties such as withstand voltage, thermal stability, ion conductivity, morphology, and denseness are greatly changed depending on the type of the electrode active material, the nonaqueous solvent, the electrolyte, and the additive in the nonaqueous electrolyte solution and the composition ratio. In the present embodiment, a film is formed on a surface of an electrode (electrode active material layer) by allowing a phenyl fluorophosphate as an additive to be contained in a nonaqueous electrolyte solution. In addition, it is considered that, due to the properties such as withstand voltage and thermal stability of the film, when the lithium ion secondary battery is used at a high charge voltage, the lithium ion secondary battery is excellent in electric capacity retention characteristics and suppression of an increase in internal resistance when stored in a high-temperature environment, and favorably maintains the electric capacity even when repeatedly charged and discharged after storage in a high-temperature environment, and thus exhibits excellent cycle characteristics.

In the present specification, the phrase "containing a fluorophosphate as an additive" in the nonaqueous electrolyte solution means that the fluorophosphate is contained so as to function as an additive, separately from the electrolyte and the nonaqueous solvent. Here, the fact that the fluorophosphate functions as an additive means that a film having properties such as withstand voltage and thermal stability is formed on the surface of the electrode (electrode active material layer) as described above.

### <Fluorophosphate>

The fluorophosphate of the present embodiment is represented by Chemical Formula (1).

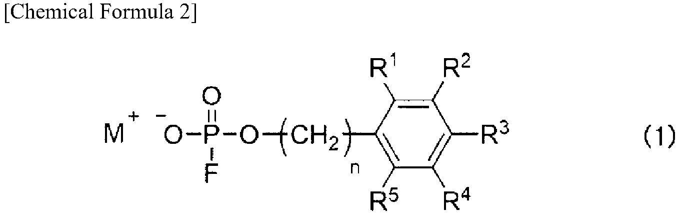

In Chemical Formula (1), M⁺ represents an alkali metal ion. The alkali metal ion is not particularly limited, and examples thereof include a lithium ion, a sodium ion, a potassium ion, a rubidium ion, and a cesium ion. These can be used singly or in combination of two or more kinds thereof.

Among those listed as examples of M⁺, lithium ions are preferable from the viewpoint of battery characteristics. From the viewpoint of easy availability and easy synthesis of fluorophosphate, lithium ions and sodium ions are preferable.

In Chemical Formula (1), R¹ to R⁵ each independently represent a hydrogen atom; a hydrocarbon group having 1 to 10 carbon atoms; an alkoxy group having 1 to 10 carbon atoms; a hydrocarbon group having 1 to 10 carbon atoms and a halogen atom and/or an unsaturated bond (hereinafter, referred to as a "hydrocarbon group having a halogen atom or the like"); or an alkoxy group having 1 to 10 carbon atoms and a halogen atom and/or an unsaturated bond (hereinafter, referred to as an "alkoxy group having a halogen atom or the like"). Alternatively, R¹ to R⁵ each independently represent any of a hydrocarbon group having 1 to 10 carbon atoms; an alkoxy group having 1 to 10 carbon atoms; a hydrocarbon group having 1 to 20 carbon atoms and a halogen atom, a heteroatom, and/or an unsaturated bond; or an alkoxy group having 1 to 20 carbon atoms and a halogen atom, a heteroatom, and/or an unsaturated bond, and optionally selected combinations are bonded to each other to form a cyclic structure.

In the present specification, when the range of the number of carbon atoms is represented, it means that the range includes the number of carbon atoms of all integers included in the range. Therefore, for example, a hydrocarbon group having "1 to 3 carbon atoms" means all hydrocarbon groups having 1, 2, and 3 carbon atoms.

The hydrocarbon group having 1 to 10 carbon atoms in R¹ to R⁵ is not particularly limited, and examples thereof include a linear or branched chain alkyl group and a cyclic alkyl group. Examples of the chain alkyl group include a methyl group, an ethyl group, a propyl group, a butyl group, a pentyl group, a hexyl group, a heptyl group, an octyl group, a nonyl group, and a decyl group. The cyclic alkyl group is not particularly limited, and examples thereof include a cyclopentyl group and a cyclohexyl group. The number of carbon atoms in the hydrocarbon group is preferably 1 to 8 and more preferably 1 to 6.

The alkoxy group having 1 to 10 carbon atoms in R¹ to R⁵ is not particularly limited, and examples thereof include a chain alkoxy group and a cyclic alkoxy group. The chain alkoxy group is not particularly limited, and examples thereof include a methoxy group, an ethoxy group, a propoxy group, a butoxy group, a pentoxy group, and a hexoxy group. The cyclic alkoxy group is not particularly limited, and examples thereof include a cyclopentoxy group and a cyclohexoxy group. The number of carbon atoms in the alkoxy group is preferably 1 to 8 and more preferably 1 to 6.

In R¹ to R⁵, the hydrocarbon group having 1 to 10 carbon atoms and a halogen atom means a functional group in which a part or all of hydrogen atoms in the hydrocarbon group are substituted with a halogen atom. Examples of the halogen atom include atoms of fluorine, chlorine, bromine, and iodine. In the hydrocarbon group having 1 to 10 carbon atoms and a halogen atom, a hydrocarbon group having 1 to 8 carbon atoms and a halogen atom is preferable, and a hydrocarbon group having 1 to 6 carbon atoms and a halogen atom is more preferable.

In R¹ to R⁵, the hydrocarbon group having 1 to 10 carbon atoms and an unsaturated bond means a hydrocarbon group having a carbon-carbon double bond or triple bond. The number of unsaturated bonds is preferably in a range of 1 to 6, more preferably in a range of 1 to 4, and particularly preferably in a range of 1 to 3.

The hydrocarbon group having a halogen atom or the like is not particularly limited, and examples thereof include chain halogen-containing alkyl groups such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group, and a hexafluoro-2-propyl group; cyclic halogen-containing alkyl groups such as 2-iodocyclohexyl group, 2-bromocyclohexyl group, 2-chlorocyclohexyl group and 2-fluorocyclohexyl group; chain alkenyl groups such as a 2-propenyl group, an isopropenyl group, a 2-butenyl group, and a 3-butenyl group; cyclic alkenyl groups such as 2-cyclopentenyl group, 2-cyclohexenyl group, and 3-cyclohexenyl group; chain alkynyl groups such as a 2-propynyl group, a 1-butynyl group, a 2-butynyl group, a 3-butynyl group, a 1-pentynyl group, a 2-pentynyl group, a 3-pentynyl group, and a 4-pentynyl group; aryl groups such as a phenyl group; alkoxyphenyl groups such as 3-methoxyphenyl group, 4-methoxyphenyl group, 3,5-dimethoxyphenyl group, and 4-phenoxyphenyl group; halogen-containing phenyl groups such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group, and a 3,5-difluorophenyl group; and naphthyl groups such as a 1-naphthyl group, a 2-naphthyl group, and a 3-amino-2-naphthyl group.

In R¹ to R⁵, the alkoxy group having 1 to 10 carbon atoms and a halogen atom means a functional group in which a part or all of hydrogen atoms in the alkoxy group are substituted with a halogen atom. Examples of the halogen atom include atoms of fluorine, chlorine, bromine, and iodine. In the alkoxy group having 1 to 10 carbon atoms and a halogen atom, an alkoxy group having 1 to 8 carbon atoms and a halogen atom is preferable, and an alkoxy group having 1 to 6 carbon atoms and a halogen atom is more preferable.

In R¹ to R⁵, the alkoxy group having 1 to 10 carbon atoms and an unsaturated bond means, for example, an alkoxy group having a carbon-carbon double bond or triple bond. The number of unsaturated bonds is preferably in a range of 1 to 6, more preferably in a range of 1 to 4, and particularly preferably in a range of 1 to 3.

The alkoxy group having a halogen atom or the like is not particularly limited, and examples thereof include chain halogen-containing alkoxy groups such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichloroethoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group, and a 1,1,1,3,3,3-hexafluoro-2-propoxy group; cyclic halogen-containing alkoxy groups such as a 2-iodocyclohexoxy group, a 2-bromocyclohexoxy group, a 2-chlorocyclohexoxy group, and a 2-fluorocyclohexoxy group; chain alkenyl alkoxy groups such as a 2-propenoxy group, an isopropenoxy group, a 2-butenoxy group, and a 3-butenoxy group; cyclic alkenyl alkoxy groups such as a 2-cyclopentenoxy group, a 2-cyclohexenoxy group, and a 3-cyclohexenoxy group; chain alkynyl alkoxy groups such as a 2-propynoxy group, a 1-butynoxy group, a 2-butynoxy group, a 3-butynoxy group, a 1-pentynoxy group, a 2-pentynoxy group, a 3-pentynoxy group, and a 4-pentynoxy group; aryloxy groups such as a phenoxy group, a 3-methylphenoxy group, a 4-methylphenoxy group, and a 3,5-dimethylphenoxy group; and halogen-containing phenoxy groups such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3,5-diiodophenoxy group, a 3,5-dibrophenoxy group, a 3,5-dichlorophenoxy group, and a 3,5-difluorophenoxy group.

As described above, R¹ to R⁵ each independently represent any of a hydrocarbon group having 1 to 10 carbon atoms; an alkoxy group having 1 to 10 carbon atoms; a hydrocarbon group having 1 to 20 carbon atoms and a halogen atom, a heteroatom, and/or an unsaturated bond; or an alkoxy group having 1 to 20 carbon atoms and a halogen atom, a heteroatom, and/or an unsaturated bond, and optionally selected combinations may be bonded to each other to form a cyclic structure.

When R¹ to R⁵ form the above-described cyclic structure, the hydrocarbon group having 1 to 10 carbon atoms and the alkoxy group having 1 to 10 carbon atoms are the same as those in the above-described case. Therefore, a detailed description thereof will be omitted.

When R¹ to R⁵ form the above-described cyclic structure, the hydrocarbon group having 1 to 20 carbon atoms and a halogen atom means a functional group in which a part or all of hydrogen atoms in the hydrocarbon group are substituted with a halogen atom. Examples of the halogen atom include atoms of fluorine, chlorine, bromine, and iodine. In the hydrocarbon group having 1 to 20 carbon atoms and a halogen atom, a hydrocarbon group having 3 to 10 carbon atoms and a halogen atom is preferable, and a hydrocarbon group having 3 to 5 carbon atoms and a halogen atom is more preferable.

When R¹ to R⁵ form the above-described cyclic structure, the hydrocarbon group having 1 to 20 carbon atoms and a heteroatom means a functional group in which a part or all of hydrogen atoms and carbon atoms in the hydrocarbon group are substituted with a heteroatom. The heteroatom represents an atom such as oxygen, nitrogen, or sulfur. In the hydrocarbon group having 1 to 20 carbon atoms and a heteroatom, a hydrocarbon group having 2 to 10 carbon atoms and a heteroatom is preferable, and a hydrocarbon group having 2 to 5 carbon atoms and a heteroatom is more preferable.

When R¹ to R⁵ form the above-described cyclic structure, the hydrocarbon group having 1 to 20 carbon atoms and an unsaturated bond means, for example, a hydrocarbon group having a carbon-carbon double bond or triple bond. The number of unsaturated bonds is preferably in a range of 1 to 6, more preferably in a range of 1 to 4, and particularly preferably in a range of 1 to 3.

When R¹ to R⁵ form the above-described cyclic structure, the alkoxy group having 1 to 20 carbon atoms and a halogen atom means a functional group in which a part or all of hydrogen atoms in the alkoxy group are substituted with a halogen atom. Examples of the halogen atom include atoms of fluorine, chlorine, bromine, and iodine. In the alkoxy group having 1 to 20 carbon atoms and a halogen atom, an alkoxy group having 3 to 10 carbon atoms and a halogen atom is preferable, and an alkoxy group having 3 to 5 carbon atoms and a halogen atom is more preferable.

When R¹ to R⁵ form the above-described cyclic structure, the alkoxy group having 1 to 20 carbon atoms and a heteroatom means a functional group in which a part or all of hydrogen atoms and carbon atoms in the alkoxy group are substituted with a heteroatom. The heteroatom represents an atom such as oxygen, nitrogen, or sulfur. In the alkoxy group having 1 to 20 carbon atoms and a heteroatom, an alkoxy group having 2 to 10 carbon atoms and a heteroatom is preferable, and an alkoxy group having 2 to 5 carbon atoms and a heteroatom is more preferable.

When R¹ to R⁵ form the above-described cyclic structure, the alkoxy group having 1 to 20 carbon atoms and an unsaturated bond means, for example, an alkoxy group having a carbon-carbon double bond or triple bond. The number of unsaturated bonds is preferably in a range of 1 to 6, more preferably in a range of 1 to 4, and particularly preferably in a range of 1 to 3.

Specific examples of the cyclic structure formed by any combination of R¹ to R⁵ include linear alkylene groups such as a methylene group, an ethylene group, a propylene group, a butylene group, a pentylene group, a hexylene group, a heptylene group, an octylene group, and a nonylene group; halogen-containing linear alkylene groups such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group, and a tetrafluoroethylene group; and cyclic hydrocarbon groups such as a cyclohexylene group, a phenylene group, a benzylene group, a naphthylene group, an anthracylene group, a naphthacylene group, and a pentacylene group. Other examples of the cyclic structure formed by any combination of R¹ to R⁵ include linear alkylenedioxy groups such as a methylenedioxy group, an ethylenedioxy group, a propylenedioxy group, a butylenedioxy group, a pentylenedioxy group, a hexylenedioxy group, a heptylenedioxy group, an octylenedioxy group, and a nonylenedioxy group; cyclic alkylenedioxy groups such as a cyclohexylenedioxy group; halogen-containing linear alkylenedioxy groups such as an iodomethylenedioxy group, a diiodomethylenedioxy group, a bromomethylenedioxy group, a dibromomethylenedioxy group, a fluoromethylenedioxy group, a difluoromethylenedioxy group, an iodoethylenedioxy group, a 1,1-diiodoethylenedioxy group, a 1,2-diiodoethylenedioxy group, a triiodoethylenedioxy group, a tetraiodoethylenedioxy group, a chloroethylenedioxy group, a 1,1-dichloroethylenedioxy group, a 1,2-dichloroethylenedioxy group, a trichloroethylenedioxy group, a tetrachloroethylenedioxy group, a fluoroethylenedioxy group, a 1,1-difluoroethylenedioxy group, a 1,2-difluoroethylenedioxy group, a trifluoroethylenedioxy group, and a tetrafluoroethylenedioxy group; arylenedioxy groups such as a phenylenedioxy group, a benzylenedioxy group, a naphthylenedioxy group, an anthracylenedioxy group, a naphthacylenedioxy group, and a pentacylenedioxy group; and groups in which a part or all of these functional groups are substituted with a halogen atom or the like. Examples of the halogen atom include atoms of fluorine, chlorine, bromine, and iodine.

In Chemical Formula (1), n represents an integer of 0 to 10. When n is 0, the fluorophosphate represented by Chemical Formula (1) has a structure in which a phosphate skeleton and a benzene skeleton are directly bonded as follows. 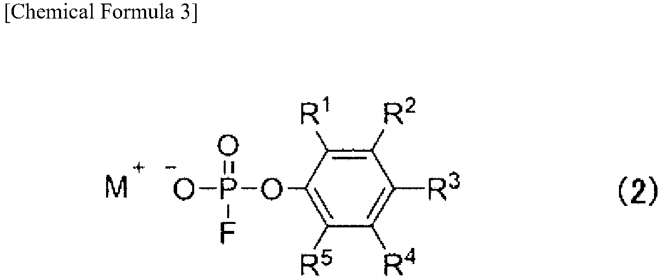 wherein M⁺ and R¹ to R⁵ are as described above.

When n is an integer of 1 to 10, -(CH₂)ₙ- in Chemical Formula (1) is a methylene group (n = 1), an ethylene group (n = 2), a propylene group (n = 3), a butylene group (n = 4), a pentylene group (n = 5), a hexylene group (n = 6), a heptylene group (n = 7), an octylene group (n = 8), a nonylene group (n = 9), or a decanylene group (n = 10). Among them, from the viewpoint of easy availability, a methylene group, an ethylene group, a propylene group, a butylene group, a pentylene group, and a hexylene group in which n is in a range of 1 to 6 are preferable. Note that -(CH₂)ₙ- may be either linear or branched.

Among the fluorophosphates represented by Chemical Formula (1), lithium phenyl fluorophosphate, sodium phenyl fluorophosphate, lithium benzyl fluorophosphate, sodium benzyl fluorophosphate, lithium 4-tert-amylphenyl fluorophosphate, and sodium 4-tert-amylphenyl fluorophosphate are preferable from the viewpoint of resource amount and availability of raw materials.

The addition amount of the fluorophosphate is preferably in a range of 0.01 mass% to 2 mass%, more preferably in a range of 0.05 mass% to 1 mass%, and still more preferably in a range of 0.1 mass% to 0.5 mass% with respect to the total mass of the nonaqueous electrolyte solution. By setting the addition amount to 0.01 mass% or more, a high discharge capacity can be maintained even after storage in a high-temperature environment, and cycle characteristics can be further improved even at a high charge voltage. On the other hand, by setting the addition amount to 2 mass% or less, the solubility of fluorophosphate in a nonaqueous solvent can be favorably maintained. The term "solubility" as used herein means that 0.005 g or more of fluorophosphate is dissolved in 100 g of a nonaqueous solvent at 25 °C.

### <Electrolyte>

As the electrolyte, a conventionally known electrolyte used for various secondary batteries can be adopted. The electrolyte preferably has an alkali metal ion as a cation from the viewpoint of solubility in a nonaqueous solvent and characteristics of the secondary battery. Examples of the alkali metal ion include a lithium ion, a sodium ion, and a potassium ion. For example, when the secondary battery is a lithium ion secondary battery, a lithium salt can be used as the electrolyte.

In addition, as the electrolyte, an electrolyte having a fluorine-containing anion is preferable. The fluorine-containing anion is not particularly limited, and examples thereof include BF₄⁻, PF₆⁻, BF₃CF₃⁻, BF₃C₂F₅⁻, CF₃SO₃⁻, C₂F₅SO₃⁻, C₃F₇SO₃⁻, C₄F₉SO₃⁻, N(SO₂F)₂⁻, N(CF₃SO₂)₂⁻, N(C₂F₅SO₂)₂⁻, N(CF₃SO₂)(CF₃CO)⁻, N(CF₃SO₂)(C₂F₅SO₂)⁻, and C(CF₃SO₂)₃⁻. These electrolytes having a fluorine-containing anion may be used singly or in combination of two or more kinds thereof. Among the fluorine-containing anions, BF₄⁻, PF₆⁻, and N(CF₃SO₂)₂⁻ are preferable, and BF₄⁻and PF₆⁻ are particularly preferable from the viewpoint of improving the safety and stability of the nonaqueous electrolyte solution and the electrical conductivity and cycle characteristics.

The concentration of the electrolyte in the nonaqueous solvent is not particularly limited, but is usually in a range of 0.1 M to 2 M, preferably in a range of 0.15 M to 1.8 M, more preferably in a range of 0.2 M to 1.5 M, and particularly preferably in a range of 0.3 M to 1.2 M. By setting the concentration of the electrolyte to 0.1 M or more, it is possible to prevent the electrical conductivity of the nonaqueous electrolyte solution from becoming insufficient. On the other hand, by setting the concentration of the electrolyte to 2 M or less, it is possible to suppress a decrease in electrical conductivity due to an increase in viscosity of the nonaqueous electrolyte solution and to prevent a decrease in performance of the secondary battery.

### <Nonaqueous solvent>

The nonaqueous solvent (organic solvent) used in the nonaqueous electrolyte solution is not particularly limited, and examples thereof include cyclic carbonate esters, chain carbonate esters, phosphate esters, cyclic ethers, chain ethers, lactone compounds, chain esters, nitrile compounds, amide compounds, and sulfone compounds. These nonaqueous solvents can be used singly or in combination of two or more kinds thereof. Among these nonaqueous solvents, cyclic carbonate esters and chain carbonate esters are preferable in the present embodiment.

The cyclic carbonate ester is not particularly limited, and examples thereof include ethylene carbonate; propylene carbonate; butylene carbonate; and cyclic carbonate esters in which at least a part of hydrogen atoms is substituted with a fluorine atom, such as fluoroethylene carbonate, trans-difluoroethylene carbonate, and cis-difluoroethylene carbonate. These cyclic carbonate esters can be used singly or in combination of two or more kinds thereof.

The chain carbonate ester is not particularly limited, and examples thereof include dimethyl carbonate; ethyl methyl carbonate; diethyl carbonate; and chain carbonate esters in which at least a part of hydrogen atoms is substituted with a fluorine atom, such as fluoromethyl methyl carbonate, difluoromethyl methyl carbonate, trifluoromethyl methyl carbonate, bis(fluoromethyl)carbonate, bis(difluoro)methyl carbonate, bis(trifluoromethyl)carbonate, 2-fluoroethyl methyl carbonate, ethyl fluoromethyl carbonate, 2,2-difluoroethyl methyl carbonate, 2-fluoroethyl fluoromethyl carbonate, ethyldifluoromethyl carbonate, 2,2,2-trifluoroethylmethyl carbonate, 2,2-difluoroethylfluoromethyl carbonate, 2-fluoroethyldifluoromethyl carbonate, ethyltrifluoromethyl carbonate, ethyl-(2-fluoroethyl)carbonate, ethyl-(2,2-difluoroethyl)carbonate, bis(2-fluoroethyl)carbonate, ethyl-(2,2,2-trifluoroethyl)carbonate, 2,2-difluoroethyl-2'-fluoroethyl carbonate, bis(2,2-difluoroethyl)carbonate, 2,2,2-trifluoroethyl-2'-fluoroethyl carbonate, 2,2,2-trifluoroethyl-2',2'-difluoroethyl carbonate, and bis(2,2,2-trifluoroethyl)carbonate. These chain carbonate esters can be used singly or in combination of two or more kinds thereof.

The phosphate ester is not particularly limited, and examples thereof include trimethyl phosphate; triethyl phosphate; ethyl dimethyl phosphate; diethyl methyl phosphate; and phosphate esters in which at least a part of hydrogen atoms is substituted with a fluorine atom, such as trifluoroethyl dimethyl phosphate, bis(trifluoroethyl)methyl phosphate, and tris(trifluoroethyl)phosphate. These phosphate esters can be used singly or in combination of two or more kinds thereof.

The cyclic ether is not particularly limited, and examples thereof include tetrahydrofuran, 2-methyltetrahydrofuran, 1,4-dioxane, and 1,3-dioxolane. These cyclic ethers can be used singly or in combination of two or more kinds thereof.

The chain ether is not particularly limited, and examples thereof include dimethoxyethane, ethylene glycol diethyl ether, triethylene glycol dimethyl ether, and tetraethylene glycol dimethyl ether. These chain ethers can be used singly or in combination of two or more kinds thereof.

The lactone compound is not particularly limited, and examples thereof include γ-butyrolactone, γ-valerolactone, and δ-valerolactone. These lactone compounds can be used singly or in combination of two or more kinds thereof.

The chain ester is not particularly limited, and examples thereof include methyl propionate; methyl acetate; ethyl acetate; methyl formate; and chain esters in which at least a part of hydrogen atoms is substituted with a fluorine atom, such as methyl difluoroacetate and ethyl trifluoroacetate. These chain esters can be used singly or in combination of two or more kinds thereof.

The nitrile compound is not particularly limited, and examples thereof include acetonitrile, adiponitrile, and valeronitrile. These nitrile compounds can be used singly or in combination of two or more kinds thereof.

The amide compound is not particularly limited, and examples thereof include dimethylformamide.

The sulfone compound is not particularly limited, and examples thereof include sulfolane, sulfolene, and 3-methylsulfolane. These sulfone compounds can be used singly or in combination of two or more kinds thereof.

### <Other additives>

In the nonaqueous electrolyte solution of the present embodiment, for the purpose of improving the performance of the secondary battery, other additives may be contained separately from the nonaqueous solvent, the electrolyte, and the fluorophosphate.

The other additives are not particularly limited, and examples thereof include at least one compound selected from the group consisting of a phosphorus compound, a boron compound, an acid anhydride, a cyclic carbonate having an unsaturated bond, a sulfur compound, and an amine having an acetoacetyl group.

The type of the phosphorus compound is not particularly limited as long as the characteristics of the nonaqueous electrolyte solution of the present embodiment and the secondary battery using the same are not impaired, and various phosphorus compounds can be selected. Examples of the phosphorus compound include phosphines, phosphonic acids, phosphates, phosphate ester salts, and phosphorus complex salts.

Further, the phosphines are not particularly limited, and examples thereof include trimethylphosphine, triethylphosphine, triisopropylphosphine, and triphenylphosphine. The phosphonic acids are not particularly limited, and examples thereof include dimethyl phosphite, diethyl phosphite, dibutyl phosphite, diphenyl phosphite, and bis(2,2,2,-trifluoroethyl)phosphite. The phosphate is not particularly limited, and examples thereof include lithium fluorophosphate, sodium fluorophosphate, potassium fluorophosphate, lithium difluorophosphate, sodium difluorophosphate, and potassium difluorophosphate. The phosphate ester salt is not particularly limited, and examples thereof include lithium dimethylphosphate, sodium dimethylphosphate, potassium dimethylphosphate, lithium diethylphosphate, sodium diethylphosphate, potassium diethylphosphate, lithium dipropylphosphate, sodium dipropylphosphate, potassium dipropylphosphate, lithium diphenylphosphate, sodium diphenylphosphate, potassium diphenylphosphate, lithium bis(2,2,2-trifluoroethyl)phosphate, sodium bis(2,2,2-trifluoroethyl)phosphate, potassium bis(2,2,2-trifluoroethyl)phosphate, lithium bis(1,1,1,3,3,3-hexafluoroisopropyl)phosphate, sodium bis(1,1,1,3,3,3-hexafluoroisopropyl)phosphate, and potassium bis(1,1,1,3,3,3-hexafluoroisopropyl)phosphate. The phosphorus complex salt is not particularly limited, and examples thereof include lithium difluorobisoxalate phosphate, sodium difluorobisoxalate phosphate, lithium tetrafluorooxalate phosphate, and sodium tetrafluorooxalate phosphate. Incidentally, as the phosphorus compound, lithium difluorophosphate, lithium difluorobisoxalate phosphate, and lithium tetrafluoroxalate phosphate are preferable from the viewpoint of easy availability and battery characteristics.

The type of the boron compound is not particularly limited as long as the characteristics of the nonaqueous electrolyte solution of the present embodiment and the secondary battery using the same are not impaired, and various boron compounds can be selected. Examples of the boron compound include a borate, a borate ester, and a boron complex salt.

The borate is not particularly limited, and examples thereof include lithium tetraborate, sodium tetraborate, potassium tetraborate, lithium tetrafluoroborate, sodium tetrafluoroborate, and potassium tetrafluoroborate. The borate ester is not particularly limited, and examples thereof include trimethyl borate, triethyl borate, triisopropyl borate, tributyl borate, tripentyl borate, trihexyl borate, triheptyl borate, triphenyl borate, tris(2,2,2-triiodoethyl)borate, tris(2,2,2-tribromoethyl)borate, tris(2,2,2-trichloroethyl)borate, tris(2,2,2-trifluoroethyl)borate, tris(4-iodophenyl)borate, tris(4-bromophenyl)borate, tris(4-chlorophenyl)borate, tris(4-fluorophenyl)borate, diethylmethyl borate, and ethyldimethyl borate. The boron complex salt is not particularly limited, and examples thereof include lithium difluoro(oxalato)borate, sodium difluoro(oxalato)borate, potassium difluoro(oxalato)borate, lithium bis(oxalato)borate, sodium bis(oxalato)borate, potassium bis(oxalato)borate, lithium bis(salicylato)borate, sodium bis(salicylato)borate, potassium bis(salicylato)borate, lithium bis[1,2'-benziolato(2)-O,O']borate, sodium bis[1,2'-benziolato(2)-O,O']borate, and potassium bis[1,2'-benziolato(2)-O,O']borate. Incidentally, as the boron compound, lithium difluoro(oxalato)borate, lithium bis(oxalato)borate, and lithium bis(salicylato)borate are preferable from the viewpoint of easy availability and battery characteristics.

The type of the acid anhydride is not particularly limited as long as the characteristics of the nonaqueous electrolyte solution of the present embodiment and the secondary battery using the same are not impaired, and various acid anhydrides can be selected. Specific examples of the acid anhydride include linear carboxylic anhydrides such as acetic anhydride, propionic anhydride, butyric anhydride, valeric anhydride, hexanoic anhydride, heptanoic anhydride, octanoic anhydride, nonanoic anhydride, decanoic anhydride, eicosanoic anhydride, docosanoic anhydride, benzoic anhydride, 4-methoxybenzoic anhydride, diphenylacetic anhydride, crotonic anhydride, cyclohexanecarboxylic anhydride, elaidic anhydride, isobutyric anhydride, isovaleric anhydride, lauric anhydride, linoleic anhydride, myristic anhydride, angelic anhydride, chlorodifluoroacetic anhydride, trichloroacetic anhydride, difluoroacetic anhydride, trifluoroacetic anhydride, and 4-trifluoromethylbenzoic anhydride; cyclic carboxylic anhydrides such as phthalic anhydride, 3-acetamidophthalic anhydride, 4,4'-carbonyldiphthalic anhydride, 4,4'-biphthalic anhydride, 3-iodophthalic anhydride, 3-bromophthalic anhydride, 3-chlorophthalic anhydride, 3-fluorophthalic anhydride, 4-iodophthalic anhydride, 4-bromophthalic anhydride, 4-chlorophthalic anhydride, 4-fluorophthalic anhydride, 4,5-diiodophthalic anhydride, 4,5-dibromophthalic anhydride, 4,5-dichlorophthalic anhydride, 4,5-difluorophthalic anhydride, 4,4 '-sulfonyldiphthalic anhydride, 3-nitrophthalic anhydride, 4-nitrophthalic anhydride, exo-3,6-epoxyhexahydrophthalic anhydride, exo-3,6-epoxy-1,2,3,6-tetrahydrophthalic anhydride, tetraiodophthalic anhydride, tetrachlorophthalic anhydride, tetrafluorophthalic anhydride, 4-tert-butylphthalic anhydride, 4-ethynylphthalic anhydride, 4,4'-(hexafluoroisopropylidene)diphthalic anhydride, succinic anhydride, (R)-(+)-2-acetoxysuccinic anhydride, (S)-(-)-2-acetoxysuccinic anhydride, 2-buten-1-ylsuccinic anhydride, butyl succinic anhydride, decyl succinic anhydride, 2,3-dimethylsuccinic anhydride, 2-dodecen-1-ylsuccinic anhydride, dodecyl succinic anhydride, octadecenisuccinic anhydride, (2,7-octadien-1-yl)succinic anhydride, n-octylsuccinic anhydride, hexadecylsuccinic anhydride, maleic anhydride, 2,3-bis(2,4,5-trimethyl-3-thienyl)maleic anhydride, 2-(2-carboxyethyl)-3-methyl-maleic anhydride, 2,3-dimethylmaleic anhydride, 2,3-diphenylmaleic anhydride, phenylmaleic anhydride, 4-pentene-1,2-dicarboxylic anhydride, 2,3-anthracene dicarboxylic anhydride, bicyclo[2,2,2]oct-5-ene-2,3-dicarboxylic anhydride, 4-bromo-1,8-naphthalenedicarboxylic anhydride, (±)-trans-1,2-cyclohexanedicarboxylic anhydride, cis-4-cyclohexene-1,2-dicarboxylic anhydride, 2,5-dibromo-3,4-thiophenedicarboxylic anhydride, 5,6-dihydro-1,4-dithiin-2,3-dicarboxylic anhydride, 2,2'-biphenyldicarboxylic anhydride, 4-methylcyclohexane-1,2-dicarboxylic anhydride, 3-methyl-4-cyclohexene-1,2-dicarboxylic anhydride, 4-methyl-4-cyclohexene-1,2-dicarboxylic anhydride, 2,3-naphthalenedicarboxylic anhydride, 3,4-thiophenedicarboxylic anhydride, 1,8-naphthalenedicarboxylic anhydride, 5-norbornene-2,3-dicarboxylic anhydride, 1,2-cyclopropanedicarboxylic anhydride, glutaric anhydride, 3,3-pentamethylene glutaric anhydride, 2,2-dimethylglutaric anhydride, 3,3-dimethylglutaric anhydride, 3-methylglutaric anhydride, 2-phthalimidoglutaric anhydride, 3,3-tetramethylene glutaric anhydride, N-methylisatoic anhydride, 4-iodoisatoic anhydride, 4-bromoisatoic anhydride, 4-chloroisatoic anhydride, 4-fluoroisatoic anhydride, 5-iodoisatoic anhydride, 5-bromoisatoic anhydride, 5-chloroisatoic anhydride, 5-fluoroisatoic anhydride, itaconic anhydride, calonic anhydride, citraconic anhydride, diglycolic anhydride, 1,2-naphthalic anhydride, pyromellitic anhydride, het anhydride, and 2,2,3,3,4,4-hexafluoropentanedioic anhydride; linear sulfonic anhydrides such as trifluoromethanesulfonic anhydride and p-toluenesulfonic anhydride; cyclic sulfonic anhydrides such as 2-sulfobenzoic acid anhydride, tetraiodo-O-sulfobenzoic acid anhydride, tetrabromo-O-sulfobenzoic acid anhydride, tetrachloro-O-sulfobenzoic acid anhydride, and tetrafluoro-O-sulfobenzoic acid anhydride; chain phosphinic anhydrides such as diphenylphosphinic acid; cyclic phosphonic anhydrides such as 1-propanephosphonic anhydride; and 3,4-diiodophenylboronic anhydride, 3,4-dibromophenylboronic anhydride, 3,4-dichlorophenylboronic anhydride, 3,4-difluorophenylboronic anhydride, 4-iodophenylboronic anhydride, 4-bromophenylboronic anhydride, 4-chlorophenylboronic anhydride, 4-fluorophenylboronic anhydride, m-terphenylboronic anhydride, 3,4,5-triiodophenylboronic anhydride, 3,4,5-tribromophenylboronic anhydride, 3,4,5-trichlorophenylboronic anhydride, and 3,4,5-trifluorophenylboronic anhydride. The acid anhydride is preferably maleic anhydride from the viewpoint of easy availability and battery characteristics.

The type of the cyclic carbonate having an unsaturated bond is not particularly limited as long as the characteristics of the nonaqueous electrolyte solution of the present embodiment and the secondary battery using the same are not impaired, and various cyclic carbonates can be selected. Examples of the cyclic carbonate having an unsaturated bond include vinylene carbonate, iodovinylene carbonate, bromovinylene carbonate, chlorovinylene carbonate, fluorovinylene carbonate, 1,2-diiodovinylene carbonate, 1,2-dibromovinylene carbonate, 1,2-dichlorovinylene carbonate, 1,2-difluorovinylene carbonate, methylvinylene carbonate, iodomethylvinylene carbonate, bromomethylvinylene carbonate, chloromethylvinylene carbonate, fluoromethylvinylene carbonate, dichloromethylvinylene carbonate, dibromomethylvinylene carbonate, dichloromethylvinylene carbonate, difluoromethylvinylene carbonate, triiodomethylvinylene carbonate, tribromomethylvinylene carbonate, trichloromethylvinylene carbonate, trifluoromethylvinylene carbonate, ethylvinylene carbonate, propylvinylene carbonate, butylvinylene carbonate, dimethylvinylene carbonate, diethylvinylene carbonate, dipropylvinylene carbonate, and vinyl ethylene carbonate. As the cyclic carbonate having an unsaturated bond, vinylene carbonate and vinyl ethylene carbonate are preferable from the viewpoint of easy availability and battery characteristics.

The type of the sulfur compound is not particularly limited as long as the characteristics of the nonaqueous electrolyte solution of the present embodiment and the secondary battery using the same are not impaired, and various sulfur compounds can be selected. Examples of the sulfur compound include sulfates, sulfonates, sulfonate esters, and sulfones.

The sulfate is not particularly limited, and examples thereof include lithium sulfate, sodium sulfate, potassium sulfate, lithium fluorosulfate, sodium fluorosulfate, potassium fluorosulfate, lithium methyl sulfate, sodium methyl sulfate, potassium methyl sulfate, lithium ethyl sulfate, sodium ethyl sulfate, and potassium ethyl sulfate. The sulfonate is not particularly limited, and examples thereof include lithium trifluoromethanesulfonate, sodium trifluoromethanesulfonate, and potassium trifluoromethanesulfonate. The sulfonate ester is not particularly limited, and examples thereof include 1,3-propane sultone, 2,4-butane sultone, 1,4-butane sultone, ethylene sulfite, methyl methanesulfonate, and ethyl methanesulfonate. The sulfones are not particularly limited, and examples thereof include dimethylsulfone, diethylsulfone, diphenylsulfone, methylphenylsulfone, sulfolane, and sulfolene. The sulfur compound is preferably lithium fluorosulfate, lithium trifluoromethanesulfonate, 1,3-propane sultone, or ethylene sulfite from the viewpoint of easy availability and battery characteristics.

The type of the amines having an acetoacetyl group is not particularly limited as long as the characteristics of the nonaqueous electrolyte solution of the present embodiment and the secondary battery using the same are not impaired, and various amines can be selected. Examples of the amines having an acetoacetyl group include N,N-dimethylacetoacetamide, N,N-diethylacetoacetamide, N,N-dipropylacetoacetamide, N,N-dibutylacetoacetamide, N,N-ethylmethylacetoacetamide, N,N-methylprupylacetoacetamide, and N,N-butylmethylacetoacetamide.

The content of other additives can be appropriately set as necessary as long as the characteristics of the secondary battery are not impaired. The content of other additives is usually preferably in a range of 0.05 mass% to 20 mass%, more preferably in a range of 0.1 mass% to 10 mass%, and particularly preferably in a range of 0.5 mass% to 5 mass% with respect to the total mass of the nonaqueous electrolyte solution. By setting the content of other additives to 0.05 mass% or more, it is possible to exhibit an effect as the other additives, that is, to form a more stable film on the electrode surface. On the other hand, by setting the content of other additives to 20 mass% or less, it is possible to suppress excessive decrease in solubility of the other additives in the nonaqueous solvent. The term "solubility" as used herein means that 0.005 g or more of other additives are dissolved in 100 g of a nonaqueous solvent at 25 °C.

It is to be noted that cyclic carbonate esters in which at least a part of hydrogen atoms is substituted with a fluorine atom and chain carbonate esters in which at least a part of hydrogen atoms is substituted with a fluorine atom, both of which have been described to be used as a nonaqueous solvent, can also be used as additives separately from the nonaqueous solvent. In this case, the content of the cyclic carbonate ester and the chain carbonate ester is preferably in a range of 0.05 mass% to 20 mass%, more preferably in a range of 0.1 mass% to 10 mass%, and particularly preferably in a range of 0.5 mass% to 5 mass% with respect to the total mass of the nonaqueous electrolyte solution. By setting the content of the cyclic carbonate ester and the chain carbonate ester to 0.05 mass% or more, it is possible to exhibit a function as an additive, namely, a function of forming a more stable film on the electrode surface. On the other hand, by setting the content of the cyclic carbonate ester and the chain carbonate ester to 20 mass% or less, it is possible to suppress excessive decrease in solubility of the cyclic carbonate ester and the chain carbonate ester in a nonaqueous solvent.

### <Production of nonaqueous electrolyte solution for secondary battery>

Next, a method for producing the nonaqueous electrolyte solution of the present embodiment will be described below.

In the nonaqueous electrolyte solution according to the present embodiment, for example, a salt of the electrolyte is added to the nonaqueous solvent (organic solvent), and then at least one of the fluorophosphates is added. Further, other conventionally known additives may be added. At this time, it is preferable to use a nonaqueous solvent, a salt of an electrolyte, a fluorophosphate, and other additives which are low in impurities as far as possible by purifying these materials in advance within a range that does not lower the production efficiency. When a plurality of fluorophosphates or other additives are used, the order of addition thereof can be appropriately set as necessary.

### (Secondary battery)

Next, the secondary battery of the present invention will be described below using a lithium ion secondary battery as an example. FIG.1 is a schematic cross-sectional view showing an outline of a lithium ion secondary battery including the nonaqueous electrolyte solution of the present embodiment. In addition to the lithium ion secondary battery, the secondary battery of the present invention is also applicable to a sodium ion secondary battery, a potassium ion secondary battery, a magnesium ion secondary battery, a calcium ion secondary battery, and the like.

As shown in FIG.1, the lithium ion secondary battery according to the present embodiment has a structure in which a laminate including a positive electrode 1, a separator 3, a negative electrode 2, and a spacer 7 in this order from a positive electrode can 4 side is housed in an internal space formed by the positive electrode can 4 and a negative electrode can 5. The positive electrode 1 and the negative electrode 2 are appropriately pressure-bonded and fixed by interposing a spring 8 between the negative electrode can 5 and the spacer 7. The nonaqueous electrolyte solution containing the additive of the present embodiment is impregnated between the positive electrode 1 and the separator 3, and between the separator 3 and the negative electrode 2. The positive electrode can 4 and the negative electrode can 5 are joined to each other by sandwiching the gasket 6 between the positive electrode can 4 and the negative electrode can 5, to thereby hermetically seal the laminate.

The positive electrode active material in the positive electrode active material layer of the positive electrode 1 is not particularly limited. Examples thereof include a transition metal compound having a structure in which lithium ions can be diffused, or an oxide of the transition metal compound and lithium. More specific examples of the positive electrode active material include LiCoO₂; LiNiO₂; LiMnO₂; LiMn₂O₄; solid solutions of Li₂MnO₃ and LiMeO₂ (Me = Mn, Co, Ni); LiFePO₄; LiMnₓFe_{y}PO₄ (0 < x < 1, 0 < y < 1, x + y = 1); LiCoPO₄; LiMnPO₄; LiNiPO₄; Li₂CoP₂O₇; Li₂FePO₄F; binary transition metal oxides; ternary transition metal oxides; LiFeF₃; oxides such as TiO₂, V₂O₅, and MoO₃; and sulfides such as TiS₂ and FeS. Examples of the positive electrode active material that may be used include conductive polymers such as polyacetylene, polyparaphenylene, polyaniline, and polypyrrole; activated carbon; polymer generating radicals; and carbon materials. Among the exemplified positive electrode active materials, binary transition metal oxides and ternary transition metal oxides are preferable in the present embodiment.

The binary transition metal oxide is not particularly limited, and examples thereof include LiNiₓ₁Co_{y1}O_{z1} (0 < x1 < 2, 0 < y1 < 2, 2 ≤ z1 ≤ 4, 1 ≤ x1 + y1 ≤ 2), LiNiₓ₂Mn_{y2}O_{z2} (0 < x2 < 2, 0 < y2 < 2, 2 ≤ z2 ≤ 4, 1 ≤ x2 + y2 ≤ 2), and LiCoₓ₃Mn_{y3}O_{z3} (0 < x3 < 2, 0 < y3 < 2, 2 ≤ z3 ≤ 4, 1 ≤ x3 + y3 ≤ 2). In these binary transition metal oxides, a part of oxygen atoms may be substituted with another non-metal atom such as a phosphorus atom, a boron atom, and a fluorine atom.

In the binary transition metal oxide composed of LiNiₓ₁Co_{y1}O_{z1} and LiNiₓ₂Mn_{y2}O_{z2}, x1 and x2 represent the composition ratio of nickel in the binary transition metal oxide. x1 and x2 are each in a range of more than 0 and less than 2, preferably in a range of 0.1 or more and 1.9 or less, and more preferably in a range of 0.5 or more and 1.5 or less. x1 and x2 can be controlled by adjusting the supply amount of nickel when the positive electrode active material is produced. y1 represents the composition ratio of cobalt in the binary transition metal oxide. y1 is in a range of more than 0 and less than 2, preferably in a range of 0.1 or more and 1.9 or less, and more preferably in a range of 0.5 or more and 1.5 or less. y1 can be controlled by adjusting the supply amount of cobalt when the positive electrode active material is produced. y2 represents the composition ratio of manganese in the binary transition metal oxide. y2 is in a range of more than 0 and less than 2, preferably in a range of 0.1 or more and 1.9 or less, and more preferably in a range of 0.5 or more and 1.5 or less. y2 can be controlled by adjusting the supply amount of manganese when the positive electrode active material is produced. Incidentally, as the binary transition metal oxide composed of LiNiₓ₂Mn_{y2}O_{z2}, LiNi_{0.5}Mn_{1.5}O₄ is preferable from the viewpoint of easy availability and battery characteristics.

In the binary transition metal oxide composed of LiCoₓ₃Mn_{y3}O_{z3}, x3 represents the composition ratio of cobalt in the binary transition metal oxide. x3 is in a range of more than 0 and less than 2, preferably in a range of 0.1 or more and 1.9 or less, and more preferably in a range of 0.5 or more and 1.5 or less. x3 can be controlled by adjusting the supply amount of cobalt when the positive electrode active material is produced. y3 represents the composition ratio of manganese in the binary transition metal oxide. y3 is in a range of more than 0 and less than 2, preferably in a range of 0.1 or more and 1.9 or less, and more preferably in a range of 0.5 or more and 1.5 or less. y3 can be controlled by adjusting the supply amount of manganese when the positive electrode active material is produced.

Examples of the ternary transition metal oxide include LiNiₓ₄Co_{y4}Mn_{z4}O₂ (0 < x4 < 1, 0 < y4 < 1, 0 < z4 < 1, x4 + y4 + z4 = 1) and LiNiₓ₅Co_{y5}Al_{z5}O₂ (0 < x5 < 1, 0 < y5 < 1, 0 < z5 < 1, x5 + y5 + z5 = 1). In these ternary transition metal oxides, a part of oxygen atoms may be substituted with another non-metal atom such as a phosphorus atom, a boron atom, and a fluorine atom.

In the ternary transition metal oxide composed of LiNiₓ₄Co_{y4}Mn_{z4}O₂, x4 represents the composition ratio of nickel in the ternary transition metal oxide. x4 is in a range of more than 0 and less than 1, preferably in a range of 0.6 or more and less than 1, and more preferably in a range of 0.6 or more and 0.9 or less. x4 can be controlled by adjusting the supply amount of nickel when the positive electrode active material is produced. y4 represents the composition ratio of cobalt in the ternary transition metal oxide. y4 is in a range of more than 0 and less than 1, preferably in a range of 0.05 or more and 0.2 or less, and more preferably in a range of 0.05 or more and 0.1 or less. y4 can be controlled by adjusting the supply amount of cobalt when the positive electrode active material is produced. z4 represents the composition ratio of manganese in the ternary transition metal oxides. z4 is in a range of more than 0 and less than 1, preferably in a range of 0.05 or more and 0.2 or less, and more preferably in a range of 0.05 or more and 0.1 or less. z4 can be controlled by adjusting the supply amount of manganese when the positive electrode active material is produced.

In the ternary transition metal oxide composed of LiNiₓ₅Co_{y5}Al_{z5}O₂, x5 represents the composition ratio of nickel in the ternary transition metal oxide. x5 is in a range of more than 0 and less than 1, preferably in a range of 0.6 or more and less than 1, and more preferably in a range of 0.6 or more and 0.9 or less. x5 can be controlled by adjusting the supply amount of nickel when the positive electrode active material is produced. y5 represents the composition ratio of cobalt in the ternary transition metal oxide. y5 is in a range of more than 0 and less than 1, preferably in a range of 0.05 or more and 0.2 or less, and more preferably in a range of 0.05 or more and 0.1 or less. y5 can be controlled by adjusting the supply amount of cobalt when the positive electrode active material is produced. z5 represents the composition ratio of aluminum in the ternary transition metal oxide. z5 is in a range of more than 0 and less than 1, preferably in a range of 0.05 or more and 0.2 or less, and more preferably in a range of 0.05 or more and 0.1 or less. z5 can be controlled by adjusting the supply amount of aluminum when the positive electrode active material is produced.

Among the positive electrode active materials exemplified above, from the viewpoint of energy density and thermal stability, LiCoO₂; LiNiO₂; solid solutions of Li₂MnO₃ and LiMeO₂ (Me = Mn, Co, Ni); ternary transition metal oxides composed of LiNiₓ₄Co_{y4}Mn_{z4}O₂ (0 < x4 < 1, 0 < y4 < 1, 0 < z4 < 1, x4 + y4 + z4 = 1) or LiNiₓ₅Co_{y5}Al_{z5}O₂ (0 < x5 < 1, 0 < y5 < 1, 0 < z5 < 1, x5 + y5 + z5 = 1) are preferably used, and ternary transition metal oxides composed of LiNiₓ₄Co_{y4}Mn_{z4}O₂ (0.6 ≤ x4 < 1, 0 < y4 ≤ 0.4, 0< z4 ≤ 0.4, x4 + y4 + z4 = 1) or LiNiₓ₅Co_{y5}Al_{z5}O₂ (0.6 ≤ x5 < 1, 0 < y5 ≤ 0.4, 0 < z5 ≤ 0.4, x5 + y5 + z5 = 1) are more preferably used.

The positive electrode 1 can be obtained by molding the positive electrode active materials listed above by pressure molding together with a known conductive auxiliary agent and binder, or by mixing the positive electrode active material with a known conductive auxiliary agent and binder in an organic solvent such as pyrrolidone to prepare a paste, applying the paste to a current collector such as an aluminum foil, and drying the paste.

The material of the negative electrode active material layer in the negative electrode 2 is not particularly limited as long as it is a material capable of inserting and releasing lithium. Examples thereof include metal composite oxides, lithium metals, lithium alloys, silicon, silicon-based alloys, tin-based alloys, metal oxides, and carbon materials.

The metal composite oxide is not particularly limited, and examples thereof include Li₄Ti₅O₁₂, LiₓFe₂O₃ (0 ≤ x ≤ 1), LiₓWO₂ (0 ≤ x ≤ 1), and SnₓMe¹₁₋ₓMe²_{y}O_{z} (Me¹ = Mn, Fe, Pb, Ge, Me² = Al, B, P, Si, elements of Group 1 to 3 of the periodic table, halogen, 0 ≤ x ≤ 1, 1 ≤ y ≤ 3, 1 ≤ z ≤ 8).

The metal oxide is not particularly limited, and examples thereof include SnO, SnO₂, SiOₓ (0 < x < 2), PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅.

The carbon material is not particularly limited, and examples thereof include natural graphite, artificial graphite, borated graphite, fluorinated graphite, mesocarbon microbeads, pitch-based carbon fiber graphitized product, carbon nanotube, hard carbon, and fullerene.

As the negative electrode 2, a foil-like electrode material or a powdery electrode material can be used. In the case of the powdery material, the negative electrode 2 can be obtained by molding the powdery material by pressure molding together with a known conductive auxiliary agent and binder, or by mixing the powdery material with a known conductive auxiliary agent and binder in an organic solvent such as pyrrolidone to prepare a paste, applying the paste to a current collector such as a copper foil, and then drying the paste.

In the lithium ion secondary battery according to the present embodiment, the separator 3 is usually interposed between the positive electrode 1 and the negative electrode 2 in order to prevent a short circuit between the positive electrode 1 and the negative electrode 2. The material and shape of the separator 3 are not particularly limited, but the separator 3 is preferably a material through which the above-described nonaqueous electrolyte solution easily passes and which is insulating and chemically stable. Examples thereof include microporous films, sheets, and nonwoven fabrics made of various polymer materials, glass-coated materials obtained by coating the surfaces of these materials with glass, and nonwoven fabrics made of glass fibers. Specific examples of the polymer material include polyolefin-based polymers such as nylon (registered trademark), nitrocellulose, polyacrylonitrile, polyvinylidene fluoride, polyethylene, and polypropylene. From the viewpoint of electrochemical stability and chemical stability, a polyolefin-based polymer is preferable.

The lithium ion secondary battery of the present embodiment can be charged at a high charge voltage. The charge voltage is preferably 4.3 V or more, more preferably in a range of 4.3 V or more and 5 V or less, still more preferably in a range of 4.35 V or more and 4.8 V or less, and particularly preferably in a range of 4.4 V or more and 4.7 V or less.

The lithium ion secondary battery of the present embodiment can suppress an increase in internal resistance even when stored in a high-temperature environment after charging, and thus is excellent in storage performance. In addition, the lithium ion secondary battery of the present embodiment favorably maintains the discharge capacity even when repeatedly charged and discharged at a high charge voltage after storage in a high-temperature environment, and thus can exhibit excellent cycle characteristics. Here, the expression "storage in a high-temperature environment" means storage in a range of 40 °C or higher, preferably 40 °C or higher and 80 °C or lower, more preferably 40 °C or higher and 70 °C or lower, and still more preferably 40 °C or higher and 60 °C or lower. In addition, the expression "repeatedly charging and discharging at a high charge voltage" means charging and discharging at a charge voltage in a range of preferably 4.3 V or more, more preferably 4.3 V or more and 5 V or less, still more preferably 4.35 V or more and 4.8 V or less, and particularly preferably 4.4 V or more and 4.7 V or less.

The shape of the lithium ion secondary battery of the present embodiment is not particularly limited, and examples thereof include a cylindrical type, a square type, a laminate type, and the like in addition to the coin type cell shown in FIG.1.

The lithium ion secondary battery including the nonaqueous electrolyte solution of the present embodiment is suitable as, for example, on-board power supplies for electric vehicles (xEVs) and hybrid electric vehicles that are required to have a high operating voltage and high-temperature storage performance.

The secondary battery according to the present embodiment can exhibit excellent cycle characteristics even in a high-temperature environment, and the nonaqueous electrolyte solution of the present embodiment can be suitably used for, for example, a lithium ion secondary battery. Not that the lithium ion secondary battery shown in FIG.1 exemplarily shows one aspect of the secondary battery of the present invention, and the secondary battery of the present invention is not limited thereto.

### EXAMPLES

Hereinafter, preferred production examples and examples of the present invention will be exemplarily described in detail. However, the scope of the present invention is not limited to the production examples, materials, blending amounts, and the like described, unless otherwise limited.

### <Production of lithium phenyl fluorophosphate>

Lithium phenyl fluorophosphate as a fluorophosphate was produced by the following method.

That is, in a 250 mL recovery flask equipped with a stirrer, 8.7 g of phenyl phosphate and 4 g of hydrofluoric acid having a concentration of 50 mass% were dissolved in 40 mL of a pyridine solvent (nonaqueous solvent), and 28.6 g of trichloroacetonitrile was further added little by little with stirring at 60 °C. Next, the mixed solution was stirred for 15 hours, and then concentrated under reduced pressure. Subsequently, 50 mL of a 1.0 mol/L aqueous lithium hydroxide solution was added to the mixed solution, and the resulting solution was neutralized with an ion exchange resin and filtered, and then excess moisture and solvent were distilled off by drying under reduced pressure. The product thus obtained was further subjected to a purification treatment to obtain 2.2 g of a white solid.

The obtained white solid was subjected to anion analysis by ion chromatography (trade name: IC-850, manufactured by Metrohm Japan Co., Ltd.), and a peak corresponding to the phenyl fluorophosphate ion was observed at a retention time of 8.8 min., and the relative area was 93 %. In addition, the obtained white solid was subjected to cation analysis by ion chromatography (trade name: Dionex ICS-1500, manufactured by Thermo Fisher Scientific K.K.), and a peak of the lithium ion was detected. Thus, it was confirmed that the obtained white solid was lithium phenyl fluorophosphate.

### (Example 1)

### <Preparation of nonaqueous electrolyte solution>

In a dry box under an argon atmosphere of a dew point of -70 °C or lower, LiPF₆ was mixed with a mixed solvent (at a volume ratio of EC : DMC = 1 : 1, lithium battery grade, manufactured by Kishida Chemical Co., Ltd.) composed of ethylene carbonate (EC) and dimethyl carbonate (DMC). LiPF₆ was mixed so that the concentration of LiPF₆ was 1.0 mol/liter.

Next, lithium phenyl fluorophosphate was added to a mixed solvent containing LiPF₆. Lithium phenyl fluorophosphate was added so that the addition amount of lithium phenyl fluorophosphate was 0.3 mass% with respect to the total mass of the nonaqueous electrolyte solution. In this way, a nonaqueous electrolyte solution according to this example was prepared.

### (Example 2)

In this example, lithium benzyl fluorophosphate was used instead of lithium phenyl fluorophosphate. In addition, the addition amount of lithium benzyl fluorophosphate was 0.3 mass% with respect to the total mass of the nonaqueous electrolyte solution. A nonaqueous electrolyte solution according to this example was prepared in the same manner as in Example 1 except for these.

### (Example 3)

In this example, lithium 4-tert-amylphenyl fluorophosphate was used instead of lithium phenyl fluorophosphate. In addition, the addition amount of lithium 4-tert-amylphenyl fluorophosphate was 0.3 mass% with respect to the total mass of the nonaqueous electrolyte solution. A nonaqueous electrolyte solution according to this example was prepared in the same manner as in Example 1 except for these.

### (Example 4)

In this example, lithium 4-tert-amylphenyl fluorophosphate was used instead of lithium phenyl fluorophosphate. In addition, the addition amount of lithium 4-tert-amylphenyl fluorophosphate was 0.01 mass% with respect to the total mass of the nonaqueous electrolyte solution. A nonaqueous electrolyte solution according to this example was prepared in the same manner as in Example 1 except for these.

### (Example 5)

In this example, the volume ratio of EC : DMC was changed from 1 : 1 to 1 : 4, and lithium 4-tert-amylphenyl fluorophosphate was used instead of lithium phenyl fluorophosphate. In addition, the addition amount of lithium 4-tert-amylphenyl fluorophosphate was 2 mass% with respect to the total mass of the nonaqueous electrolyte solution. A nonaqueous electrolyte solution according to this example was prepared in the same manner as in Example 1 except for these.

### (Comparative Example 1)

In this comparative example, ethyl lithium fluorophosphate was used instead of lithium phenyl fluorophosphate. In addition, the addition amount of ethyl lithium fluorophosphate was 0.5 mass% with respect to the total mass of the nonaqueous electrolyte solution. A nonaqueous electrolyte solution according to this comparative example was prepared in the same manner as in Example 1 except for these.

### (Comparative Example 2)

In this comparative example, methyl lithium fluorophosphate was used instead of lithium phenyl fluorophosphate. In addition, the addition amount of methyl lithium fluorophosphate was 0.5 mass% with respect to the total mass of the nonaqueous electrolyte solution. A nonaqueous electrolyte solution according to this comparative example was prepared in the same manner as in Example 1 except for these.

### (Comparative Example 3)

In this comparative example, a nonaqueous electrolyte solution according to this comparative example was prepared in the same manner as in Example 1 except that lithium phenyl fluorophosphate was not added.

### (Comparative Example 4)

In this comparative example, a nonaqueous electrolyte solution according to this comparative example was prepared in the same manner as in Example 1 except that the volume ratio of EC : DMC was changed from 1 : 1 to 1 : 4 and lithium phenyl fluorophosphate was not added.

### (Evaluation of high-temperature storage performance and cycle characteristics)

### <Production of coin cell>

Coin-type lithium ion secondary batteries (coin cells) as shown in FIG.1 were prepared using the nonaqueous electrolyte solutions respectively prepared in Examples 1 to 5 and Comparative Examples 1 to 4, and the electrochemical characteristics were evaluated.

That is, LiNi_{0.6}Co_{0.2}Mn_{0.2}O₂ (manufactured by Piotrek Co., Ltd.) cut into a diameter of 11.3 mmφ was used for the positive electrode, and glass filter paper (trade name: GC-50, manufactured by Advantec Toyo Kaisha, Ltd.) was used for the separator. In addition, natural graphite (manufactured by Piotrek Co., Ltd.) cut out into a diameter of 13 mmφ was used for the negative electrode. Further, the positive electrode, the separator, and the negative electrode were laminated in this order to form a laminate, and the laminate was impregnated with each of the nonaqueous electrolyte solutions prepared in Examples 1 to 5 and Comparative Examples 1 to 4, and then the laminate was sealed to prepare each of coin cells. The entire process of assembling of the coin cell was performed in an argon glove box at a dew point of -70 °C or lower.

### <Break-in operation of coin cell>

Each of the prepared coin cells was charged to a final voltage of 4.3 V at a charge current of 0.3 mA/cm² in a thermostatic chamber at 25 °C, and further held at a constant potential of 4.3 V until the charge current reached 0.075 mA/cm² or less. Thereafter, the battery was discharged to a final voltage of 3.0 V at a discharge current of 0.3 mA/cm². Under these charge-discharge conditions, charging and discharging were performed for three cycles by a constant current constant voltage method, and the discharge capacity at the third cycle was defined as an initial discharge capacity.

### <High-temperature storage test>

Next, each coin cell subjected to the break-in operation was charged up to a final voltage of 4.3 V at 0.3 mA/cm² in a thermostatic chamber at 25 °C, and further held at a constant potential of 4.3 V until the charge current reached 0.075 mA/cm² or less, and charging was terminated. Thereafter, the temperature in the thermostatic chamber was changed to 60 °C, and each coin cell after charging was stored at a high temperature for 2 weeks.

After 2 weeks, the temperature in the thermostatic chamber was returned to 25 °C, each coin cell after high-temperature storage was discharged to a final voltage of 3.0 V at a discharge current of 0.3 mA/cm², and the capacity at that time was defined as a discharge capacity after high-temperature storage. Table 1 shows the ratio of the discharge capacity after storage when the initial discharge capacity is 100.

### <Measurement of internal resistance of coin cell>

The internal resistance of each coin cell was determined by an AC impedance technique. Each coin cell after high-temperature storage was charged to 4.3 V at a charge current of 0.3 mA/cm² in a thermostatic chamber at 25 °C, sine waves having an amplitude of ±10 mV and a frequency of 1 MHz to 50 mHz were superimposed, and the internal resistance of each coin cell was determined from the obtained Nyquist plot. Table 1 shows the ratio of the internal resistance of each of the other coin cells when the internal resistance of the coin cell using the non-electrolytic solution of Comparative Example 3 is 100.

**[Table 1]**

| | Discharge capacity after storage [%] | Internal resistance of battery [%] |
|---|---|---|
| Example 1 | 73 | 69 |
| Example 2 | 70 | 79 |
| Example 3 | 73 | 77 |
| Example 4 | 51 | 95 |
| Example 5 | 62 | 92 |
| Comparative Example 1 | 49 | 119 |
| Comparative Example 2 | 53 | 108 |
| Comparative Example 3 | 45 | 100 |
| Comparative Example 4 | 38 | 101 |

### <Cycle characteristic test 1>

Each coin cell after high-temperature storage was charged to a final voltage of 4.2 V at a charge current of 1.5 mA/cm² in a thermostatic chamber at 25 °C, and further held at a constant potential of 4.2 V until the charge current reached 0.075 mA/cm² or less. Thereafter, the battery was discharged to a final voltage of 3.0 V at a discharge current of 1.5 mA/cm². Under these charge-discharge conditions, 100 cycles of charging and discharging were performed by a constant current constant voltage method. Table 2 shows the ratio of the discharge capacity at the 100th cycle when the discharge capacity at the first cycle is 100.

**[Table 2]**

| | Discharge capacity after 100 cycles [%] |
|---|---|
| Example 1 | 95 |
| Example 2 | 93 |
| Example 3 | 94 |
| Example 4 | 93 |
| Example 5 | 93 |
| Comparative Example 1 | 95 |
| Comparative Example 2 | 95 |
| Comparative Example 3 | 93 |
| Comparative Example 4 | 91 |

### <Cycle characteristic test 2>

Each coin cell after high-temperature storage was charged to a final voltage of 4.4 V at a charge current of 1.5 mA/cm² in a thermostatic chamber at 25 °C, and further held at a constant potential of 4.4 V until the charge current reached 0.075 mA/cm² or less. Thereafter, the battery was discharged to a final voltage of 3.0 V at a discharge current of 1.5 mA/cm². Under these charge-discharge conditions, 100 cycles of charging and discharging were performed by a constant current constant voltage method. Table 3 shows the ratio of the discharge capacity at the 100th cycle when the discharge capacity at the first cycle is 100.

**[Table 3]**

| | Discharge capacity after 100 cycles [%] |
|---|---|
| Example 1 | 88 |
| Example 2 | 84 |
| Example 3 | 86 |
| Example 4 | 75 |
| Example 5 | 82 |
| Comparative Example 1 | 73 |
| Comparative Example 2 | 75 |
| Comparative Example 3 | 68 |
| Comparative Example 4 | 51 |

### (Results)

As can be seen from Table 1, in the coin cells using the nonaqueous electrolyte solutions of Examples 1 to 5, the discharge capacity after charging at a charge voltage of 4.3 V and further storing at 60 °C for 2 weeks was high and the internal resistance in the coin cell was low, as compared with each of the coin cells using the nonaqueous electrolyte solutions of Comparative Examples 1 to 4.

As shown in Table 2, in the cycle characteristic test 1 performed at a charge voltage of 4.2 V, no significant difference in discharge capacity was confirmed between the coin cells using the nonaqueous electrolyte solutions of Examples 1 to 5 and the respective coin cells using the nonaqueous electrolyte solutions of Comparative Examples 1 to 4, but in the cycle characteristic test 2 performed at a charge voltage of 4.4 V, the coin cells using the nonaqueous electrolyte solutions of Examples 1 to 5 had a higher discharge capacity after 100 cycles of charging and discharging than the respective coin cells using the nonaqueous electrolyte solutions of Comparative Examples 1 to 4.

These results showed that the lithium ion secondary batteries using the nonaqueous electrolyte solutions of Examples 1 to 5 were excellent in storage performance in a high-temperature environment, suppressed an increase in internal resistance of the battery, and were excellent in cycle characteristics even at a high charge voltage.

### LIST OF REFERENCE SIGNS

- 1: Positive electrode
- 2: Negative electrode
- 3: Separator
- 4: Positive electrode can
- 5: Negative electrode can
- 6: Gasket
- 7: Spacer
- 8: Spring

## Claims

1. A nonaqueous electrolyte solution for a secondary battery comprising:
an electrolyte; and
a nonaqueous solvent,
wherein the nonaqueous electrolyte solution for a secondary battery further contains at least one fluorophosphate represented by Chemical Formula (1) as an additive: 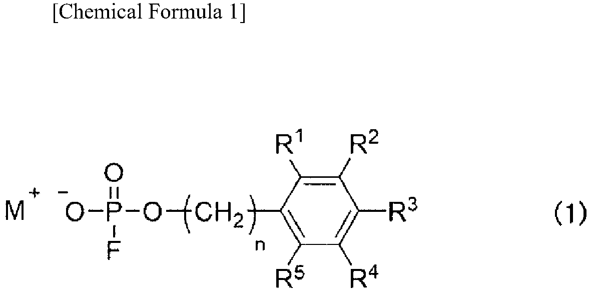
wherein M⁺ represents an alkali metal ion, R¹ to R⁵ each independently represent a hydrogen atom; a hydrocarbon group having 1 to 10 carbon atoms; an alkoxy group having 1 to 10 carbon atoms; a hydrocarbon group having 1 to 10 carbon atoms and a halogen atom and/or an unsaturated bond; or an alkoxy group having 1 to 10 carbon atoms and a halogen atom and/or an unsaturated bond, or R¹ to R⁵ each independently represent any of a hydrocarbon group having 1 to 10 carbon atoms; an alkoxy group having 1 to 10 carbon atoms; a hydrocarbon group having 1 to 20 carbon atoms and a halogen atom, a heteroatom, and/or an unsaturated bond; or an alkoxy group having 1 to 20 carbon atoms and a halogen atom, a heteroatom, and/or an unsaturated bond, and optionally selected combinations are bonded to each other to form a cyclic structure, and n represents an integer of 0 to 10.

2. The nonaqueous electrolyte solution for a secondary battery according to claim 1, wherein an addition amount of the fluorophosphate is in a range of 0.01 mass% or more and 2 mass% or less with respect to a total mass of the nonaqueous electrolyte solution for a secondary battery.

3. The nonaqueous electrolyte solution for a secondary battery according to claim 1, wherein the fluorophosphate is lithium phenyl fluorophosphate, sodium phenyl fluorophosphate, lithium benzyl fluorophosphate, sodium benzyl fluorophosphate, lithium 4-tert-amylphenyl fluorophosphate, or sodium 4-tert-amylphenyl fluorophosphate.

4. A secondary battery comprising at least:
the nonaqueous electrolyte solution for a secondary battery according to any one of claims 1 to 3;
a positive electrode; and
a negative electrode.

5. The secondary battery according to claim 4,
wherein a charge voltage is 4.3 V or more.

6. The secondary battery according to claim 5,
wherein the secondary battery is stored in an environment of 40 °C or higher after being charged at a charge voltage of 4.3 V or more.

7. The secondary battery according to claim 4,
wherein a positive electrode active material constituting a positive electrode active material layer in the positive electrode contains a binary transition metal oxide or a ternary transition metal oxide.
